# EUROPEAN PATENT SPECIFICATION

(11) **EP 3 306 441 B1**
(45) Date of publication and mention of the grant of the patent: **24.06.2020**
(21) Application number: 16205098.3
(22) Date of filing: 19.12.2016
(51) Int. Cl.: G06F 1/20, H04M 1/725, G06F 1/32

(54) **TEMPERATURE CONTROL METHOD AND APPARATUS**
TEMPERATURSTEUERUNGSVERFAHREN UND -VORRICHTUNG
PROCÉDÉ ET APPAREIL DE RÉGULATION DE TEMPÉRATURE

(30) Priority: 08.03.2016 CN 201610131244
(43) Date of publication of application: 11.04.2018
(73) Proprietor: Beijing Xiaomi Mobile Software Co., Ltd., Beijing 100085 (CN)
(72) Inventor: YANG, Dongdong, Beijing, Beijing 100085 (CN); DU, Hui, Beijing, Beijing 100085 (CN); GU, Linghua, Beijing, Beijing 100085 (CN)
(74) Representative: dompatent von Kreisler Selting Werner - Partnerschaft von Patent- und Rechtsanwälten mbB

(56) References cited:
- US-A1- 2005 246 514
- US-A1- 2012 120 625
- US-A1- 2013 099 569
- US-A1- 2014 149 753
- US-A1- 2015 000 889
- US-A1- 2015 181 117

## Description

### TECHNICAL FIELD

The present disclosure generally relates to communication technology, and more particularly, to a temperature control method and a temperature control apparatus.

### BACKGROUND

Temperature of a terminal may rise continuously when the terminal is used. A user may feel unwell if the temperature increases to a certain degree. Therefore, it needs heat dissipation in time and to control the temperature of the terminal.

In the related arts, resources of several components in the terminal may be limited to reduce a power consumption of the terminal if the temperature increases to the certain degree, thereby ensuring that the temperature of the terminal is in a regular range.

US2014149753 provides a method, an apparatus, and a computer program product for allocating a total power budget among a plurality of components of a user device. The apparatus prioritizes the plurality of components based on a user experience model (performance/power model) for each of the plurality of components. The user experience model (performance/power model) of a component includes a measure of component attribute as a function of component power consumption. The apparatus allocates portions of the total power budget among the user-device components based on priority established by the user experience model. The apparatus may further prioritize the components based on weights assigned to the components.

US2013099569 provides a charging control method adapted to be used in a portable electronic device. The portable electronic device includes a display module and a rechargeable battery. The charging control method includes the following steps. Firstly, a working status of the display module is obtained and a control signal is transmitted by a control unit. Next, the control signal is received and a charging power provided to the rechargeable battery is adjusted according to the control signal by a power control unit.

US2012120625 provides a low profile display enclosure system for enclosing a display device for viewing that protects the display device from environmental effects and is configured to dissipate heat generated within the display enclosure. The substantially sealed display enclosure comprises a rigid bezel, a substantially transparent front cover coupled to the bezel, and a rear cover assembly that includes a heat sink portion. The thickness of the bezel is minimized to provide the enclosure with a low profile about the periphery of the display device enclosed therein. Thermal control devices may be mounted within the enclosure to modulate a temperature within the enclosure.

### SUMMARY

The invention is defined in the independent claims. Preferred embodiments are defined in the dependent claims.

It is to be understood that, both the foregoing general description and the following detailed description are exemplary and explanatory only and are not restrictive of the present disclosure.

### BRIEF DESCRIPTION OF THE DRAWINGS

The accompanying drawings herein are incorporated in and become parts of the specification, illustrate embodiments consistent with the invention and, together with the description, serve to explain the principles of the invention.
Fig. 1 is a flow chart showing a temperature control method according to an exemplary embodiment;
Fig. 2 is a flow chart showing a temperature control method according to another exemplary embodiment;
Fig. 3 is a flow chart showing a temperature control method according to another exemplary embodiment;
Fig. 4 is a flow chart showing a temperature control method according to another exemplary embodiment;
Fig. 5 is a flow chart showing a temperature control method according to another exemplary embodiment;
Fig. 6 is a flow chart showing a temperature control method according to another exemplary embodiment;
Fig. 7 is a block diagram illustrating a temperature control apparatus according to an exemplary embodiment;
Fig. 8 is a block diagram illustrating a temperature control apparatus according to another exemplary embodiment;
Fig. 9 is a block diagram illustrating a temperature control apparatus according to another exemplary embodiment;
Fig. 10 is a block diagram illustrating a temperature control apparatus according to another exemplary embodiment;
Fig. 11 is a block diagram illustrating a temperature control apparatus according to another exemplary embodiment;
Fig. 12 is a block diagram illustrating a temperature control apparatus according to another exemplary embodiment;
Fig. 13 is a block diagram illustrating a terminal entity according to an exemplary embodiment;
Fig. 14 is a block diagram illustrating a device 800 for controlling temperature according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the disclosure. Instead, they are merely examples of apparatuses and methods consistent with aspects related to the disclosure as recited in the appended claims.

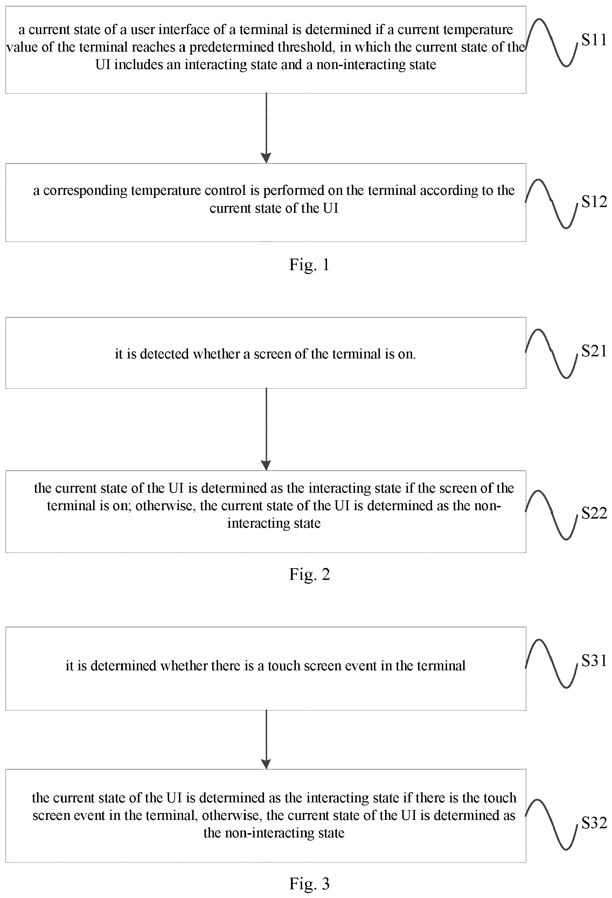

Fig. 1 is a flow chart showing a temperature control method according to an exemplary embodiment. As shown in Fig. 1, the temperature control method is applied in a terminal and includes followings.

In a block S11, a current state of a user interface (UI for short) of a terminal is determined if a current temperature value of the terminal reaches a predetermined threshold, in which the current state of the UI includes an interacting state and a non-interacting state.

The terminal determines the current temperature value by continuously detecting temperature values of each heat source in the terminal. For example, the temperature value of the terminal may be detected by placing a corresponding temperature sensor within the terminal. The heat source in the terminal may include a processor, a charging module, a backlight module and the like.

If the current temperature value of the terminal reaches the predetermined threshold, it is determined whether the user is operating the terminal. It is illustrated that the current state of the UI of the terminal is the interacting state if the user is operating the terminal; otherwise, the current state of the UI of the terminal is the non-interacting state.

In a block S12, a corresponding temperature control is performed on the terminal according to the current state of the UI.

That is to say, in combination with the current temperature value and whether the user is operating the terminal, the temperature control is performed on the terminal. The temperature control strategy varies with the current temperature value and current state of the UI.

In a specific implementation, the terminal may provide a selecting function for determining whether to activate the above temperature control method for the user. The terminal may perform the temperature control method automatically, if the user selects to activate the temperature control method; or, the terminal may automatically perform the temperature control method in a particular period or by being triggered via a particular event, according to a selection of the user.

In the embodiment, the temperature control is performed according to the current temperature value and the current state of the UI of the terminal. The temperature control strategy varies with the current temperature value and current state of the UI. Thus, the temperature control may be performed on the terminal in combination with an actual usage situation of the terminal such that the usage may not be influenced to a greatest extent when the temperature control is performed, thereby largely improving the user experience.

Fig. 2 is a flow chart showing a temperature control method according to another exemplary embodiment. As shown in Fig. 2, the block S12 may specifically include followings.

In a block S21, it is detected whether a screen of the terminal is on.

Whether the screen of the terminal is on may be determined by detecting that the screen of the terminal is locked or unlocked. The screen of the terminal is on if the screen of the terminal is locked. And the screen of the terminal is off if the screen of the terminal is unlocked.

Alternatively, whether the screen of the terminal is on may be determined also by detecting that the screen of the terminal is bright or dark. It is determined that the screen of the terminal is on if the screen of the terminal is bright. And it is determined that the screen of the terminal is off if the screen of the terminal is dark.

Further, on the basis of above judgments, a time factor may be employed. For example, it is determined that the screen of the terminal is off if the screen of the terminal is dark very soon after being bright. Only when a period that the screen of the terminal is unlocked or is bright is greater than a predetermined period, it is determined that the screen of the terminal is on, otherwise, it is determined that the screen of the terminal is off.

In a block S22, the current state of the UI is determined as the interacting state if the screen of the terminal is on; otherwise, the current state of the UI is determined as the non-interacting state.

It is illustrated that the user is operating the terminal if the screen is on, and then the current state of the UI may be determined as the interacting state.

It is illustrated that the user is not operating the terminal directly if the screen is off, and then the current state of the UI may be determined as the non-interacting state.

In a process that the terminal is used by the user, it is common that the user is operating the terminal if the screen of the terminal is unlocked or is bright. Therefore, in the embodiment, whether the screen of the terminal is on is taken as a condition for determining the current state of the UI of the terminal, which may ensure a correctness of determining the current state of the UI.

Fig. 3 is a flow chart showing a temperature control method according to another exemplary embodiment. As shown in Fig. 3, the block S12 may specifically includes followings.

In a block S31, it is determined whether there is a touch screen event in the terminal.

Detecting whether there is a touch screen event is to detect whether the user is touching the screen.

In a block S32, the current state of the UI is determined as the interacting state if there is the touch screen event in the terminal; otherwise, the current state of the UI is determined as the non-interacting state.

It may be determined that the user is operating the terminal when the user is touching the screen. Further, the current state of the UI may be determined as the interacting state; otherwise, the current state of the UI may be determined as the non-interacting state.

In the embodiment, the current state of the UI of the terminal is determined via the touch screen event, which may reflect the current state of the UI of the terminal more directly and more precisely.

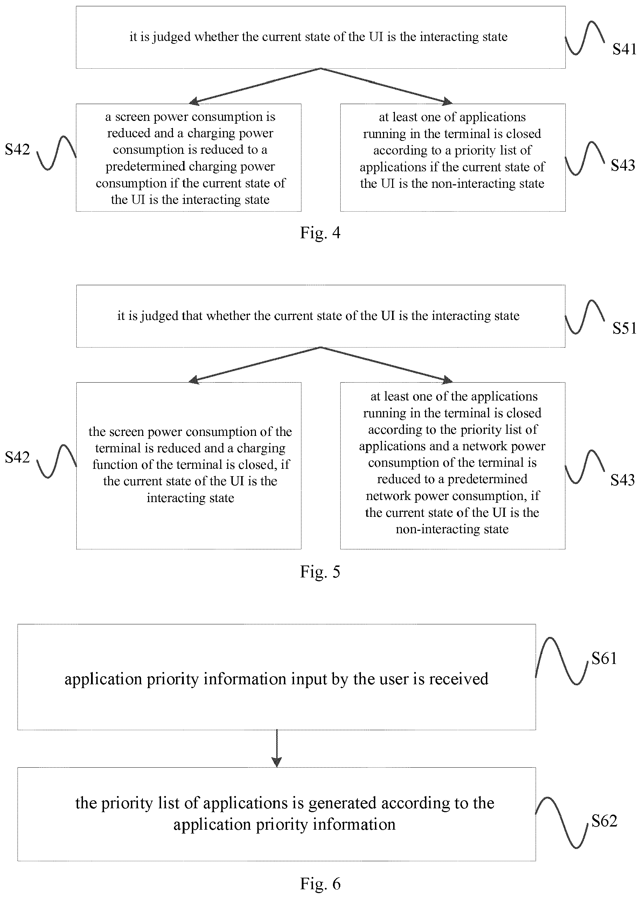

Fig. 4 is a flow chart showing a temperature control method according to another exemplary embodiment. As shown in Fig. 4, if the current temperature value of the terminal reaches a first predetermined threshold, the block S12 may specifically include followings.

In a block S41, it is judged whether the current state of the UI is the interacting state.

When the current temperature value reaches the first predetermined threshold, a processor power consumption is not limited directly. It is continuously judged whether the current state of the UI is the interacting state, that is, it is determined whether the user is operating the terminal.

In a block S42, a screen power consumption is reduced and a charging power consumption is reduced to a predetermined charging power consumption if the current state of the UI is the interacting state.

When the current temperature value of the terminal reaches the first predetermined threshold, the processor power consumption is not limited if the user is operating the terminal, the screen power consumption and the charging power consumption are reduced such that not only the temperature control but also a normal usage of the terminal by the user are ensured. A premise of reducing the charging power consumption is that the terminal is being charged, that is, if the current state of the UI is the interacting state and the terminal is being charged at the same time, then the charging power consumption is reduced.

In a block S43, at least one of applications running in the terminal is closed according to a priority list of applications if the current state of the UI is the non-interacting state.

When the current temperature value of the terminal reaches the first predetermined threshold, the temperature control may be realized by limiting the processor power consumption if the user is not operating the terminal directly. Specifically, several applications running in the terminal may be closed in the priority list such that the processor power consumption may be reduced.

In the embodiment, if the current temperature value of the terminal reaches a certain degree, different temperature control strategies are performed according to the current states of the UI of the terminal. If the current state of the UI is the interacting state, in order to ensure that a system runs smoothly when the user is operating the terminal, instead of limiting the processor power consumption, the screen power consumption and the charging power consumption are limited to realize the temperature control. If the current state of the UI is the non-interacting state, the processor power consumption may be limited directly to realize the temperature control. Thus, the method realizes the corresponding temperature control according to the actual usage situation such that the usage may not be influenced to a greatest extent when the temperature control is performed, thereby largely improving the user experience.

Fig. 5 is a flow chart showing a temperature control method according to another exemplary embodiment. As shown in Fig. 5, when the current temperature value of the terminal reaches a second predetermined threshold, the block S12 may specifically include followings.

In a block S51, it is judged that whether the current state of the UI is the interacting state.

The second predetermined threshold is greater than the first predetermined threshold.

When the current temperature reaches the second predetermined threshold, it is illustrated that the temperature value of the terminal reaches a higher level. It may be unable to control the temperature of the terminal into a regular range if the above temperature control strategy is performed. Therefore, a stricter temperature control strategy may be performed.

In a block S52, the screen power consumption of the terminal is reduced and a charging function of the terminal is closed, if the current state of the UI is the interacting state.

If the temperature value reaches the higher level while the user is operating the terminal, in order to ensure not only the normal usage of the terminal by the user, but also the temperature control, in addition to reducing the screen power consumption of the terminal, the charging function needs to be closed such that the charging power consumption is reduced to 0 to ensure the temperature control.

A premise of closing the charging function is that the terminal is being charged, that is, if the current state of the UI is the interacting state and the terminal is being charged, the charging function of the terminal is closed.

In a block S53, at least one of the applications running in the terminal is closed according to the priority list of applications and a network power consumption of the terminal is reduced to a predetermined network power consumption, if the current state of the UI is the non-interacting state.

If the temperature value reaches the higher level while the user is not operating the terminal, in addition to closing the applications running in the terminal, the network power consumption needs to be limited. That is, the network function is limited (for example, music or video download via the network is limited) to ensure the temperature control.

In the embodiment, if the current temperature value of the terminal reaches a certain degree, different temperature control strategies are performed according to the current states of the UI of the terminal. If the current state of the UI is the interacting state, in order to ensure that a system runs smoothly when the user is operating the terminal, instead of limiting the processor power consumption, the screen power consumption is limited and the charging power consumption is closed to realize the temperature control. If the current state of the UI is the non-interacting state, the processor power consumption and the network power consumption may be limited directly to realize the temperature control. Thus, the method realizes the corresponding temperature control according to the actual usage situation such that the usage may not be influenced to a greatest extent when the temperature control is performed, thereby largely improving the user experience.

In the above embodiments, the priority list of applications has existed when at least one of the applications running in the terminal is closed according to the priority list. That is to say, the priority list needs to be predetermined. The terminal may generate the priority list by defaulted. Or, the priority list may be set by inputting via the user. A latter one may be implemented by a following manner.

Fig. 6 is a flow chart showing a temperature control method according to another exemplary embodiment. As shown in Fig. 6, a method for determining the priority list includes followings.

In a block S61, application priority information input by the user is received.

The terminal may provide a setting function for setting the priority of the applications. For example, the terminal may provide icons or a name list of all applications in the terminal such that the user may input the priority information according to the icons and the name list.

In a block S62, the priority list of applications is generated according to the application priority information.

The priority list of applications is configured to indicate a priority order of applications, and at least one of the applications running in the terminal is closed in the priority order from low to high.

In the embodiment, the application priority information is set by the user such that a result that the terminal closes the applications according to the application priority information may reflect the user's demand accurately. Furthermore, there is not a case that the application considered to be important by the user is closed, thereby improving the user experience.

In another embodiment, a specific implementation of reducing the screen power consumption of the terminal may include:
a screen brightness of the terminal is reduced to a predetermined screen brightness; and/or
a screen key light of the terminal is closed.

It is to be illustrated that, specific decrease degrees of the screen power consumption are different when the current temperature value reaches the first predetermined threshold or the second predetermined threshold. For example, if the current temperature value reaches the first predetermined threshold, the decrease degree of the screen power consumption is respective small. And if the current temperature value reaches the second predetermined threshold, the decrease degree of the screen power consumption is respective great.

In the embodiment, the screen power consumption is reduced by reducing the screen brightness of the screen and/or closing the screen key light such that the decrease of the power consumption is realized without influencing the user experience, thereby realizing the temperature control of the terminal.

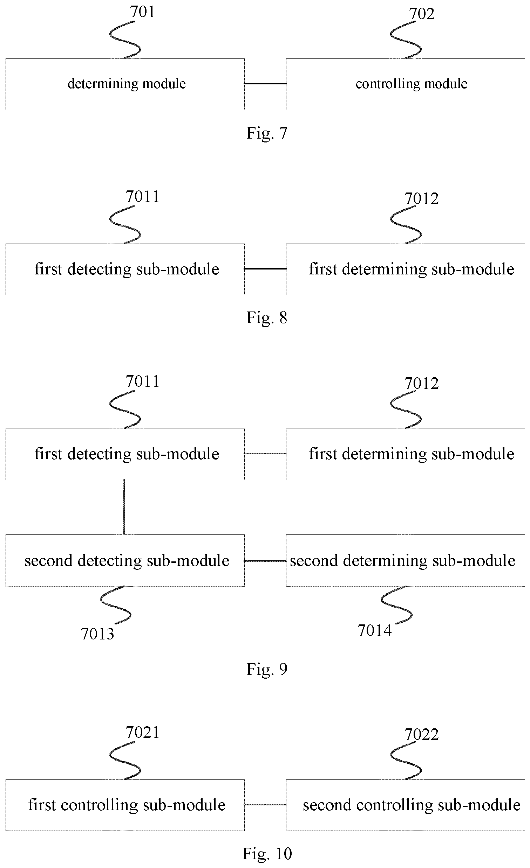

Fig. 7 is a block diagram illustrating a temperature control apparatus according to an exemplary embodiment. As shown in Fig. 7, the apparatus includes a determining module 701 and the controlling module 702.

The determining module 701 is configured to determine a current state of a user interface (UI for short) of a terminal if a current temperature value of the terminal reaches a predetermined threshold, in which the current state of the UI includes an interacting state and a non-interacting state.

The controlling module 702 is configured to perform a corresponding temperature control on the terminal according to the current state of the UI.

Fig. 8 is a block diagram illustrating a temperature control apparatus according to another exemplary embodiment. As shown in Fig. 8, the determining module 701 includes a first detecting sub-module 7011 and a first determining sub-module 7012.

The first detecting sub-module 7011 is configured to detect whether a screen of the terminal is on.

The first determining sub-module 7012 is configured to determine the current state of the UI as the interacting state if the screen of the terminal is on, otherwise, to determine the current state of the UI as the non-interacting state.

Fig. 9 is a block diagram illustrating a temperature control apparatus according to another exemplary embodiment. As shown in Fig. 9, the determining module 701 further includes a second detecting sub-module 7013 and a second determining sub-module 7014.

The second detecting sub-module 7013 is configured to detect whether there is a touch screen event in the terminal.

The second determining sub-module 7014 is configured to determine the current state of the UI as the interacting state if there is the touch screen event in the terminal, otherwise, to determine the current state of the UI as the non-interacting state.

Fig. 10 is a block diagram illustrating a temperature control apparatus according to another exemplary embodiment. As shown in Fig. 10, the controlling module 702 includes a first controlling sub-module 7021 and a second controlling sub-module 7022.

The first controlling sub-module 7021 is configured to reduce a screen power consumption of the terminal and to reduce a charging power consumption of the terminal to a predetermined charging power consumption if the current state of the UI is the interacting state, when the current temperature value reaches a first predetermined threshold.

The second controlling sub-module 7022 is configured to close at least one of applications running in the terminal according to a priority list of applications if the current state of the UI is the non-interacting state when the current temperature value reaches a first predetermined threshold.

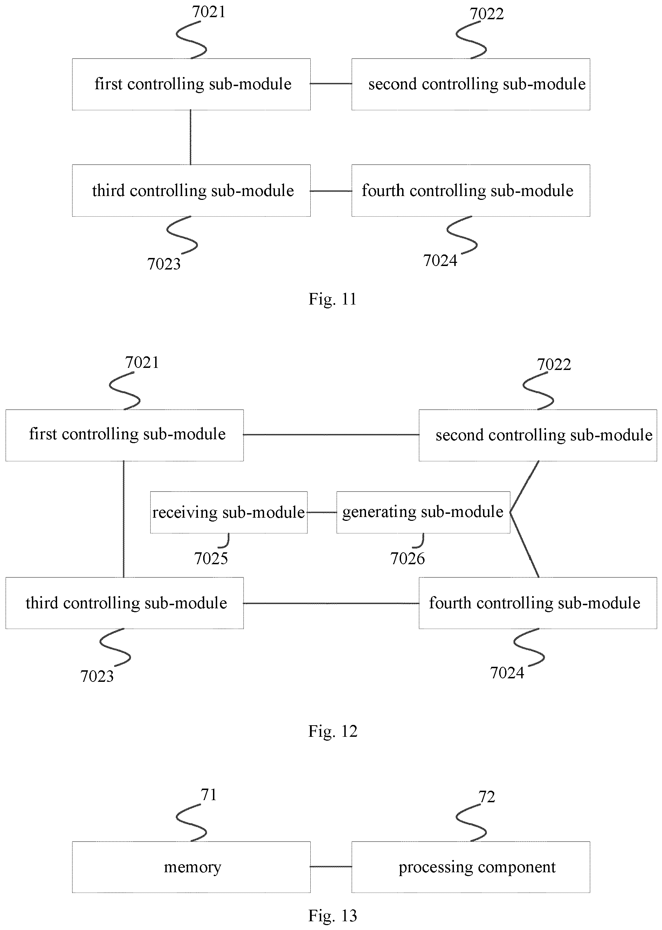

Fig. 11 is a block diagram illustrating a temperature control apparatus according to another exemplary embodiment. As shown in Fig. 11, the controlling module 702 further includes a third controlling sub-module 7023 and a fourth controlling sub-module 7024.

The third controlling sub-module 7023 is configured to reduce the screen power consumption of the terminal and to close a charging function of the terminal if the current state of the UI is the interacting state, when the current temperature value reaches a second predetermined threshold.

The fourth controlling sub-module 7024 is configured to close at least one of the applications running in the terminal according to the priority list of applications and to reduce a network power consumption of the terminal to a predetermined network power consumption if the current state of the UI is the non-interacting state, when the current temperature value reaches a second predetermined threshold.

Fig. 12 is a block diagram illustrating a temperature control apparatus according to another exemplary embodiment. As shown in Fig. 12, the controlling module 702 includes a receiving sub-module 7025 and a generating sub-module 7026.

The receiving sub-module 7025 is configured to receive application priority information input by a user before the second controlling sub-module or the fourth controlling sub-module closes at least one of the applications running in the terminal according to the priority list of applications.

The generating sub-module 7026 is configured to generate the priority list of applications according to the application priority information.

The priority list of applications is configured to indicate a priority order of applications, and at least one of the applications running in the terminal is closed in the priority order from low to high.

In another embodiment, the first controlling sub-module 7021 is specifically configured to:
reduce a screen brightness of the terminal to a predetermined screen brightness; and/or
close a screen key light of the terminal.

In another embodiment, the third controlling sub-module 7023 is specifically configured to:
reduce a screen brightness of the terminal to a predetermined screen brightness; and/or
close a screen key light of the terminal.

With respect to the apparatuses in the above embodiments, the specific manners for performing operations for individual modules therein have been described in detail in the embodiments regarding the methods, which are not elaborated herein again.

The above description has described internal functional modules and schematic diagrams of the temperature control apparatus. Fig. 13 is a block diagram illustrating a terminal entity according to an exemplary embodiment. As shown in Fig. 13, the terminal includes a memory 71 and a processing component 72.

The memory 71 is configured to store an instruction executable by the processing component 72.

The processing component 72 is configured to:
determine a current state of a UI of a terminal if a current temperature value of the terminal reaches a predetermined threshold, in which the current state of the UI includes an interacting state and a non-interacting state; and
perform a corresponding temperature control on the terminal according to the current state of the UI.

In the above embodiment of the terminal, it is to be understood that, the processing component 72 may be a central processing unit (CPU), or may be another general processor, a digital signal processor (DSP), an application specific integrated circuit (ASIC), etc. The general processor may be a microprocessor, or may be other regular processors, etc. And the above memory may be a read-only memory (ROM), a random access memory (RAM), a flash memory, a disk or a solid state disk. A SIM card is known as a user identification card, an intelligent card, and a digital mobile phone provided with the SIM card can be used. That is, the computer chip stores information of a user of the digital mobile phone and content such as an encrypted cipher code and a telephone dictionary etc. The acts in the method disclosed by combining embodiments of the present disclosure may be implemented by a hardware processor or a combination of hardware and software modules in the processor.

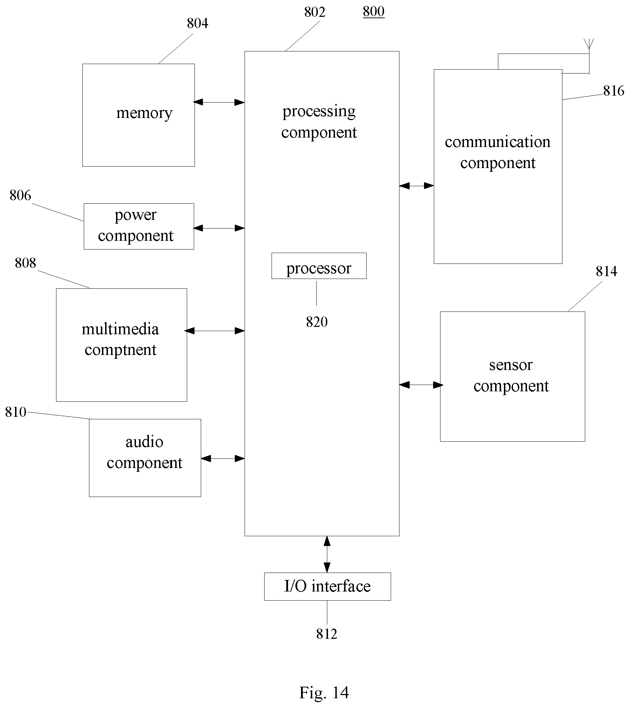

Fig. 14 is a block diagram illustrating a device 800 for controlling temperature according to an exemplary embodiment. For example, the device 800 may be a mobile phone, a computer, a digital broadcasting terminal, a messaging device, a game console, a tablet device, a medical device, fitness equipment, a Personal Digital Assistant PDA, and the like.

Referring to Fig. 14, the device 800 may include the following one or more components: a processing component 802, a memory 804, a power component 806, a multimedia component 808, an audio component 810, an Input/Output (I/O) interface 812, a sensor component 814, and a communication component 816.

The processing component 802 typically controls overall operations of the device 800, such as the operations associated with display, telephone calls, data communications, camera operations, and recording operations. The processing component 802 may include one or more processors 820 to execute instructions to perform all or part of the acts in the above described methods. Moreover, the processing component 802 may include one or more modules which facilitate the interaction between the processing component 802 and other components. For instance, the processing component 802 may include a multimedia module to facilitate the interaction between the multimedia component 808 and the processing component 802.

The memory 804 is configured to store various types of data to support the operation of the device 800. Examples of such data include instructions for any applications or methods operated on the device 800, contact data, phonebook data, messages, pictures, video, etc. The memory 804 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 806 provides power to various components of the device 800. The power component 806 may include a power management system, one or more power sources, and any other components associated with the generation, management, and distribution of power in the device 800.

The multimedia component 808 includes a screen providing an output interface between the device 800 and the user. In some embodiments, the screen may include a liquid crystal display (LCD) and a press panel (TP). If the screen includes the press panel, the screen may be implemented as a press screen to receive input signals from the user. The press panel includes one or more press sensors to sense presses, swipes, and other gestures on the press panel. The press sensors may not only sense a boundary of a press or swipe action, but also sense a duration time and a pressure associated with the press or swipe action. In some embodiments, the multimedia component 808 includes a front camera and/or a rear camera. The front camera and/or the rear camera may receive external multimedia data while the device 800 is in an operation mode, such as a photographing mode or a video mode. Each of the front camera and the rear camera may be a fixed optical lens system or have focus and optical zoom capability.

The audio component 810 is configured to output and/or input audio signals. For example, the audio component 810 includes a microphone (MIC) configured to receive an external audio signal when the device 800 is in an operation mode, such as a call mode, a recording mode, and a voice recognition mode. The received audio signal may be further stored in the memory 804 or transmitted via the communication component 816. In some embodiments, the audio component 810 further includes a speaker to output audio signals.

The I/O interface 812 provides an interface for the processing component 802 and peripheral interface modules, such as a keyboard, a click wheel, buttons, and the like. The buttons may include, but are not limited to, a home button, a volume button, a starting button, and a locking button.

The sensor component 814 includes one or more sensors to provide status assessments of various aspects of the device 800. For instance, the sensor component 814 may detect an open/closed status of the device 800 and relative positioning of components (e.g. the display and the keypad of the device 800). The sensor component 814 may also detect a change in position of the device 800 or of a component in the device 800, a presence or absence of user contact with the device 800, an orientation or an acceleration/deceleration of the device 800, and a change in temperature of the device 800. The sensor component 814 may include a proximity sensor configured to detect the presence of nearby objects without any physical contact. The sensor component 814 may also include a light sensor, such as a CMOS or CCD image sensor, for use in imaging applications. In some embodiments, the sensor component 814 may also include an accelerometer sensor, a gyroscope sensor, a magnetic sensor, a pressure sensor, or a temperature sensor.

The communication component 816 is configured to facilitate wired or wireless communication between the device 800 and other devices. The device 800 can access a wireless network based on a communication standard, such as WIFI, 2G, or 3G, or a combination thereof. In one exemplary embodiment, the communication component 816 receives a broadcast signal or broadcast associated information from an external broadcast management system via a broadcast channel. In one exemplary embodiment, the communication component 816 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 800 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer readable storage medium including instructions, such as the memory 804 including instructions. The above instructions are executable by the processor 820 in the device 800, for performing the above-described methods. For example, the non-transitory computer-readable storage medium may be a ROM, a RAM, a CD-ROM, a magnetic tape, a floppy disc, an optical data storage device, and the like.

## Claims

1. A temperature control method, comprising:
determining (S11) a current state of a user interface of a terminal if a current temperature value of the terminal reaches a predetermined threshold, wherein the current state of the user interface comprises an interacting state and a non-interacting state; and
performing (S12) a corresponding temperature control on the terminal according to the current state of the user interface,
**characterized in that**
determining (S11) a current state of a user interface of a terminal comprises:
detecting (S21) whether a screen of the terminal is on and
determining (S22) the current state of the user interface as the interacting state if the screen of the terminal is on, otherwise, determining the current state of the user interface as the non-interacting state,
or
determining (S11) a current state of a user interface of a terminal comprises:
detecting (31) whether there is a touch screen event in the terminal, wherein detecting whether there is the touch screen event in the terminal comprises detecting whether the user is touching the screen and
determining (32) the current state of the user interface as the interacting state if there is the touch screen event in the terminal, otherwise, determining the current state of the user interface as the non-interacting state,
wherein if the current temperature value reaches a first predetermined threshold, performing (S12) a corresponding temperature control on the terminal according to the current state of the user interface comprises:
reducing (S42) a screen power consumption of the terminal and reducing (S42) a charging power consumption of the terminal to a predetermined charging power consumption, if the current state of the user interface is the interacting state; and
closing (S43) at least one of the applications running in the terminal according to a priority list of applications if the current state of the user interface is the non-interacting state.

2. The method according to claim 1, wherein if the current temperature value reaches a second predetermined threshold, performing (S12) a corresponding temperature control on the terminal according to the current state of the user interface comprises:
reducing (S52) the screen power consumption of the terminal and closing (S52) a charging function of the terminal, if the current state of the user interface is the interacting state; and
closing (S53) at least one of the applications running in the terminal according to the priority list of applications and reducing (S53) a network power consumption of the terminal to a predetermined network power consumption, if the current state of the user interface is the non-interacting state,
wherein the second predetermined threshold is greater than the first predetermined threshold.

3. The method according to claim 1 or claim 2, wherein before closing at least one of the applications running in the terminal according to the priority list of applications, the method further comprises:
receiving (S61) application priority information input by a user; and
generating (S62) the priority list of applications according to the application priority information,
wherein the priority list of applications is configured to indicate a priority order of applications, and at least one of the applications running in the terminal is closed in the priority order from low to high.

4. The method according to claim 1 or 2, wherein reducing a screen power consumption of the terminal comprises:
reducing a screen brightness of the terminal to a predetermined screen brightness; and/or
closing a screen key light of the terminal.

5. A temperature control apparatus, for a terminal providing a user interface, comprising:
a determining module (701), configured to determine a current state of the user interface of the terminal if a current temperature value of the terminal reaches a predetermined threshold, wherein the current state of the user interface comprises an interacting state and a non-interacting state; and
a controlling module (702), configured to perform a corresponding temperature control on the terminal according to the current state of the user interface,
**characterized in that**
the determining module (701) comprises:
a first detecting sub-module (7011), configured to detect whether a screen of the terminal is on and
a first determining sub-module (7012), configured to determine the current state of the user interface as the interacting state if the screen of the terminal is on, otherwise, to determine the current state of the user interface as the non-interacting state,
or
the determining module (701) comprises:
a second detecting sub-module (7013), configured to detect whether there is a touch screen event in the terminal **in that** the user touches the screen and
a second determining sub-module (7014), configured to determine the current state of the user interface as the interacting state if there is the touch screen event in the terminal, otherwise, to determine the current state of the user interface as the non-interacting state,
wherein the controlling module (702) comprises:
a first controlling sub-module (7021), configured to reduce a screen power consumption of the terminal and to reduce a charging power consumption of the terminal to a predetermined charging power consumption if the current state of the user interface is the interacting state, when the current temperature value reaches a first predetermined threshold; and
a second controlling sub-module (7022), configured to close at least one of the applications running in the terminal according to a priority list of applications if the current state of the user interface is the non-interacting state, when the current temperature value reaches a first predetermined threshold.

6. The apparatus according to claim 5, wherein the controlling module (702) further comprises:
a third controlling sub-module (7023), configured to reduce the screen power consumption of the terminal and to close a charging function of the terminal if the current state of the user interface is the interacting state, when the current temperature value reaches a second predetermined threshold; or
a fourth controlling sub-module (7024), configured to close at least one of the applications running in the terminal according to the priority list of applications and to reduce a network power consumption of the terminal to a predetermined network power consumption if the current state of the user interface is the non-interacting state, when the current temperature value reaches a second predetermined threshold,
wherein the second predetermined threshold is greater than the first predetermined threshold.

7. The apparatus according to claim 5 or 6, wherein the controlling module (702) further comprises:
a receiving sub-module (7025), configured to receive application priority information input by a user before the second controlling sub-module or the fourth controlling sub-module closes at least one of the applications running in the terminal according to the priority list of applications; and
a generating sub-module (7026), configured to generate the priority list of applications according to the application priority information,
wherein the priority list of applications is configured to indicate a priority order of applications, and at least one of the applications running in the terminal is closed in the priority order from low to high.

8. The apparatus according to claim 5 or 6, wherein the first controlling sub-module (7021) is specifically configured to:
reduce a screen brightness of the terminal to a predetermined screen brightness; and/or
close a screen key light of the terminal; and/or
the third controlling sub-module (7023) is specifically configured to:
reduce a screen brightness of the terminal to a predetermined screen brightness; and/or
close a screen key light of the terminal.

9. A computer-readable storage medium having stored therein instructions that, when executed by a processor of a terminal comprising a screen, causes the terminal to perform the temperature control method according to any one of claims 1 to 4.

## Patentansprüche

1. Temperatursteuerungsverfahren mit folgenden Schritten:
Ermitteln (S11) eines aktuellen Zustands einer Benutzerschnittstelle eines Endgeräts, wenn ein aktueller Temperaturwert des Endgeräts einen vorbestimmten Schwellenwert erreicht, wobei der aktuelle Zustand der Benutzerschnittstelle einen interagierenden Zustand und einen nicht interagierenden Zustand umfasst; und
Durchführen (S12) einer entsprechenden Temperatursteuerung an dem Endgerät entsprechend dem aktuellen Zustand der Benutzerschnittstelle,
**dadurch gekennzeichnet, dass**
das Ermitteln (S11) eines aktuellen Zustand einer Benutzerschnittstelle eines Endgeräts umfasst:
Detektieren (S21), ob ein Bildschirm des Endgeräts eingeschaltet ist und Ermitteln (S22) des aktuellen Zustands der Benutzerschnittstelle als den interagierenden Zustand, wenn der Bildschirm des Endgeräts eingeschaltet ist, andernfalls Ermitteln des aktuellen Zustands der Benutzerschnittstelle als den nicht interagierenden Zustand,
oder
das Ermitteln (S11) eines aktuellen Zustands einer Benutzerschnittstelle umfasst:
Detektieren (31), ob ein Touchscreen-Ereignis in dem Endgerät vorliegt, wobei das Detektieren, ob ein Touchscreen-Ereignis in dem Endgerät vorliegt, das Detektieren umfasst, ob der Benutzer den Bildschirm berührt, und
Ermitteln (32) des aktuellen Zustands der Benutzerschnittstelle als den interagierenden Zustand, wenn das Touchscreen-Ereignis in dem Endgerät vorliegt, andernfalls Ermitteln des aktuellen Zustands der Benutzerschnittstelle als den nicht interagierenden Zustand,
wobei, wenn der aktuelle Temperaturwert einen ersten vorbestimmten Schwellenwert erreicht, das Durchführen (S12) einer entsprechenden Temperatursteuerung auf dem Endgerät entsprechend dem aktuellen Zustand der Benutzerschnittstelle umfasst:
Verringern (S42) eines Bildschirmstromverbrauchs des Endgeräts und Verringern (S42) eines Ladestromverbrauchs des Endgeräts auf einen vorbestimmten Ladestromverbrauch, wenn der aktuelle Zustand der Benutzerschnittstelle der interagierende Zustand ist; und
Schließen (S43) mindestens einer der auf dem Endgerät laufenden Anwendungen entsprechend einer Prioritätsliste von Anwendungen, wenn der aktuelle Zustand der Benutzerschnittstelle der nicht interagierende Zustand ist.

2. Verfahren nach Anspruch 1, wobei, wenn der aktuelle Temperaturwert einen zweiten vorbestimmten Schwellenwert erreicht, das Durchführen (S12) einer entsprechenden Temperatursteuerung auf dem Endgerät entsprechend dem aktuellen Zustand der Benutzerschnittstelle umfasst:
Verringern (S52) des Bildschirmstromverbrauchs des Endgeräts und Schließen (S52) einer Ladefunktion des Endgeräts, wenn der aktuelle Zustand der Benutzerschnittstelle der interagierende Zustand ist; und
Schließen (S53) mindestens einer der auf dem Endgerät laufenden Anwendungen entsprechend der Prioritätsliste von Anwendungen und Verringern (S53) eines Netzwerkstromverbrauchs des Endgeräts auf einen vorbestimmten Netzwerkstromverbrauch, wenn der aktuelle Zustand der Benutzerschnittstelle der nicht interagierende Zustand ist,
wobei der zweite vorbestimmte Schwellenwert größer als der erste vorbestimmte Schwellenwert ist.

3. Verfahren nach Anspruch 1 oder 2, wobei vor dem Schließen mindestens einer der auf dem Endgerät laufenden Anwendungen entsprechend der Prioritätsliste von Anwendungen das Verfahren ferner umfasst:
Empfangen (S61) von Anwendungsprioritätsinformationen, die von einem Benutzer eingegeben werden; und
Erzeugen (S62) der Prioritätsliste von Anwendungen entsprechend den Anwendungsprioritätsinformationen,
wobei die Prioritätsliste von Anwendungen dazu ausgebildet, eine Prioritätsreihenfolge von Anwendungen anzugeben, und wobei mindestens eine der auf dem Endgerät laufenden Anwendungen in der Prioritätsreihenfolge von niedrig zu hoch geschlossen wird.

4. Verfahren nach Anspruch 1 oder 2, wobei das Verringern eines Bildschirmstromverbrauchs des Endgeräts umfasst:
Verringern einer Bildschirmhelligkeit des Endgeräts auf eine vorbestimmte Bildschirmhelligkeit; und/oder
Schließen eines Bildschirmführungslichts des Endgeräts.

5. Temperatursteuerungsvorrichtung für ein eine Benutzerschnittstelle bereitstellendes Endgerät mit:
einem Ermittlungsmodul (701), das zum Ermitteln eines aktuellen Zustands der Benutzerschnittstelle des Endgeräts ausgebildet ist, wenn ein aktueller Temperaturwert des Endgeräts einen vorbestimmten Schwellenwert erreicht, wobei der aktuelle Zustand der Benutzerschnittstelle einen interagierenden Zustand und einen nicht interagierenden Zustand umfasst; und
einem Steuerungsmodul (702), das zum Durchführen einer entsprechenden Temperatursteuerung auf dem Endgerät entsprechend dem aktuellen Zustand der Benutzerschnittstelle ausgebildet ist,
**dadurch gekennzeichnet, dass**
das Ermittlungsmodul (701) aufweist:
ein erstes Detektionsuntermodul (7011), das Detektiert, ob ein Bildschirm des Endgeräts eingeschaltet ist, und
ein erstes Ermittlungsuntermodul (7012), das den aktuellen Zustand der Benutzerschnittstelle als den interagierenden Zustand ermittelt, wenn der Bildschirm des Endgeräts eingeschaltet ist, oder andernfalls den aktuellen Zustand der Benutzerschnittstelle als den nicht interagierenden Zustand ermittelt,
oder
das Ermittlungsmodul (701) aufweist:
ein zweites Detektionsuntermodul (7013), das detektiert, ob ein Touchscreen-Ereignis in dem Endgerät vorliegt, indem der Benutzer den Bildschirm berührt, und
ein zweites Ermittlungsuntermodul (7014), das den aktuellen Zustand der Benutzerschnittstelle als der interagierenden Zustand ermittelt, wenn das Touchscreen-Ereignis in dem Endgerät vorliegt, oder andernfalls den aktuellen Zustand der Benutzerschnittstelle als den nicht interagierenden Zustand ermittelt,
wobei das Steuerungsmodul (702) aufweist:
eines erstes Steuerungsuntermodul (7021), das zum Verringern eines Bildschirmstromverbrauchs des Endgeräts und zum Verringern eines Ladestromverbrauchs des Endgeräts zu einem vorbestimmten Ladestromverbrauch ausgebildet ist, wenn der aktuelle Zustand der Benutzerschnittstelle der interagierende Zustand ist, wenn der aktuelle Temperaturwert einen ersten vorbestimmten Schwellenwert erreicht; und
ein zweites Steuerungsuntermodul (7022), das zum Schließen mindestens einer der auf dem Endgerät laufenden Anwendungen entsprechend einer Prioritätsliste von Anwendungen ausgebildet ist, wenn der aktuelle Zustand der Benutzerschnittstelle der nicht interagierende Zustand ist, wenn der aktuelle Temperaturwert einen ersten vorbestimmten Schwellenwert erreicht.

6. Vorrichtung nach Anspruch 5, wobei das Steuerungsmodul (702) ferner aufweist:
ein drittes Steuerungsuntermodul (7023), das zum Verringern des Bildschirmstromverbrauchs des Endgeräts und zum Schließen einer Ladefunktion des Endgeräts ausgebildet ist, wenn der aktuelle Zustand der Benutzerschnittstelle der interagierende Zustand ist, wenn der aktuelle Temperaturwert einen zweiten vorbestimmte Schwellenwert erreicht; oder
ein vierten Steuerungsuntermodul (7024), das zum Schließen mindestens einer der auf dem Endgerät laufenden Anwendungen entsprechend der Prioritätsliste von Anwendungen und zum Verringern eines Netzwerkstromverbrauchs des Endgeräts auf einen vorbestimmten Netzwerkstromverbrauch ausgebildet ist, wenn der aktuelle Zustand der Benutzerschnittstelle der nicht interagierende Zustand ist, wenn der aktuelle Temperaturwert einen zweiten vorbestimmten Schwellenwert erreicht,
wobei der zweite vorbestimmte Schwellenwert größer als der erste vorbestimmte Schwellenwert ist.

7. Vorrichtung nach Anspruch 5 oder 6, wobei das Steuerungsmodul (702) ferner aufweist:
ein Empfangsuntermodul (7025), das zum Empfangen von Anwendungsprioritätsinformationen, die von einem Benutzer eingegeben werden, ausgebildet ist, bevor das zweite Steuerungsuntermodul oder das vierte Steuerungsuntermodul mindestens eine der auf dem Endgerät laufenden Anwendungen entsprechend der Prioritätsliste von Anwendungen schließt; und
ein Erzeugungsuntermodul (7026), das zum Erzeugen der Prioritätsliste von Anwendungen entsprechend der Anwendungsprioritätsinformationen ausgebildet ist,
wobei die Prioritätsliste von Anwendungen zum Angeben einer Prioritätsreihenfolge von Anwendungen ausgebildet ist, und wobei mindestens eine der auf dem Endgerät laufenden Anwendungen in der Prioritätsreihenfolge von niedrig zu hoch geschlossen wird.

8. Vorrichtung nach Anspruch 5 oder 6, wobei das erste Steuerungsuntermodul (7021) insbesondere für Folgendes ausgebildet ist:
Verringern eines Bildschirmhelligkeit des Endgeräts auf eine vorbestimmte Bildschirmhelligkeit; und/oder
Schließen eines Bildschirmführungslichts des Endgeräts; und/oder
wobei das dritte Steuerungsuntermodul (7023) insbesondere für Folgendes ausgebildet ist:
Verringern einer Bildschirmhelligkeit des Endgeräts auf eine vorbestimmte Bildschirmhelligkeit; und/oder
Schließen eines Bildschirmführungslichts des Endgeräts.

9. Computerlesbares Speichermedium mit darauf gespeicherten Anweisungen, die, wenn von einem Prozessor eines Endgeräts mit einem Bildschirm ausgeführt, das Endgerät zum Durchführen des Temperatursteuerungsverfahrens nach einem der Ansprüche 1 bis 4 veranlassen.

## Revendications

1. Procédé de régulation de température, comprenant le fait :
de déterminer (S11) un état actuel d'une interface utilisateur d'un terminal si une valeur de température actuelle du terminal atteint un seuil prédéterminé, où l'état actuel de l'interface utilisateur comprend un état d'interaction et un état de non interaction ; et
de réaliser (S12) une régulation de température correspondante sur le terminal selon l'état actuel de l'interface utilisateur,
**caractérisé en ce que**
la détermination (S11) d'un état actuel d'une interface utilisateur d'un terminal comprend le fait :
de détecter (S21) si un écran du terminal est allumé, et
de déterminer (S22) l'état actuel de l'interface utilisateur comme étant l'état d'interaction si l'écran du terminal est allumé, sinon, de déterminer l'état actuel de l'interface utilisateur comme étant l'état de non interaction,
ou
la détermination (S11) d'un état actuel d'une interface utilisateur d'un terminal comprend le fait :
de détecter (31) s'il existe un événement d'écran tactile dans le terminal, où la détection quant à savoir s'il existe un événement d'écran tactile dans le terminal comprend le fait de détecter si l'utilisateur touche l'écran, et
de déterminer (32) l'état actuel de l'interface utilisateur comme étant l'état d'interaction s'il existe un événement d'écran tactile dans le terminal, sinon, de déterminer l'état actuel de l'interface utilisateur comme étant l'état de non interaction,
dans lequel si la valeur de température actuelle atteint un premier seuil prédéterminé, la réalisation (S12) d'une régulation de température correspondante sur le terminal selon l'état actuel de l'interface utilisateur comprend le fait :
de réduire (S42) une consommation d'énergie d'écran du terminal et de réduire (S42) une consommation d'énergie de charge du terminal jusqu'à une consommation d'énergie de charge prédéterminée, si l'état actuel de l'interface utilisateur est l'état d'interaction ; et
de fermer (S43) au moins l'une des applications s'exécutant dans le terminal selon une liste de priorité d'applications si l'état actuel de l'interface utilisateur est l'état de non interaction.

2. Procédé selon la revendication 1, dans lequel si la valeur de température actuelle atteint un deuxième seuil prédéterminé, la réalisation (S12) d'une régulation de température correspondante sur le terminal selon l'état actuel de l'interface utilisateur comprend le fait :
de réduire (S52) la consommation d'énergie d'écran du terminal et de fermer (S52) une fonction de charge du terminal, si l'état actuel de l'interface utilisateur est l'état d'interaction ; et
de fermer (S53) au moins l'une des applications s'exécutant dans le terminal selon la liste de priorité d'applications et de réduire (S53) une consommation d'énergie de réseau du terminal jusqu'à une consommation d'énergie de réseau prédéterminée, si l'état actuel de l'interface utilisateur est l'état de non interaction,
dans lequel le deuxième seuil prédéterminé est supérieur au premier seuil prédéterminé.

3. Procédé selon la revendication 1 ou 2, dans lequel avant de fermer au moins l'une des applications s'exécutant dans le terminal selon la liste de priorité d'applications, le procédé comprend en outre le fait :
de recevoir (S61) des informations de priorité d'applications introduites par un utilisateur ; et
de générer (S62) la liste de priorité d'applications selon les informations de priorité d'applications,
dans lequel la liste de priorité d'applications est configurée pour indiquer un ordre de priorité d'applications, et au moins l'une des applications s'exécutant dans le terminal est fermée dans l'ordre de priorité croissant.

4. Procédé selon la revendication 1 ou 2, dans lequel la réduction d'une consommation d'énergie d'écran du terminal comprend le fait :
de réduire une luminosité d'écran du terminal jusqu'à une luminosité d'écran prédéterminée ; et/ou
d'éteindre une lumière de touches d'écran du terminal.

5. Appareil de régulation de température, pour un terminal fournissant une interface utilisateur, comprenant :
un module de détermination (701), configuré pour déterminer un état actuel de l'interface utilisateur du terminal si une valeur de température actuelle du terminal atteint un seuil prédéterminé, où l'état actuel de l'interface utilisateur comprend un état d'interaction et un état de non interaction ; et
un module de régulation (702), configuré pour réaliser une régulation de température correspondante sur le terminal selon l'état actuel de l'interface utilisateur,
**caractérisé en ce que**
le module de détermination (701) comprend :
un premier sous-module de détection (7011), configuré pour détecter si un écran du terminal est allumé, et
un premier sous-module de détermination (7012), configuré pour déterminer l'état actuel de l'interface utilisateur comme étant l'état d'interaction si l'écran du terminal est allumé, sinon, pour déterminer l'état actuel de l'interface utilisateur comme étant l'état de non interaction,
ou
le module de détermination (701) comprend :
un deuxième sous-module de détection (7013), configuré pour détecter s'il existe un événement d'écran tactile dans le terminal dans le sens où l'utilisateur touche l'écran, et
un deuxième sous-module de détermination (7014), configuré pour déterminer l'état actuel de l'interface utilisateur comme étant l'état d'interaction s'il existe un événement d'écran tactile dans le terminal, sinon, pour déterminer l'état actuel de l'interface utilisateur comme étant l'état de non interaction,
dans lequel le module de régulation (702) comprend :
un premier sous-module de régulation (7021), configuré pour réduire une consommation d'énergie d'écran du terminal et pour réduire une consommation d'énergie de charge du terminal jusqu'à une consommation d'énergie de charge prédéterminée si l'état actuel de l'interface utilisateur est l'état d'interaction, lorsque la valeur de température actuelle atteint un premier seuil prédéterminé ; et
un deuxième sous-module de régulation (7022), configuré pour fermer au moins l'une des applications s'exécutant dans le terminal selon une liste de priorité d'applications si l'état actuel de l'interface utilisateur est l'état de non interaction, lorsque la valeur de température actuelle atteint un premier seuil prédéterminé.

6. Appareil selon la revendication 5, dans lequel le module de régulation (702) comprend en outre :
un troisième sous-module de régulation (7023), configuré pour réduire la consommation d'énergie d'écran du terminal et pour fermer une fonction de charge du terminal si l'état actuel de l'interface utilisateur est l'état d'interaction, lorsque la valeur de température actuelle atteint un deuxième seuil prédéterminé ; ou
un quatrième sous-module de régulation (7024), configuré pour fermer au moins l'une des applications s'exécutant dans le terminal selon la liste de priorité d'applications et pour réduire une consommation d'énergie de réseau du terminal jusqu'à une consommation d'énergie de réseau prédéterminée si l'état actuel de l'interface utilisateur est l'état de non interaction, lorsque la valeur de température actuelle atteint un deuxième seuil prédéterminé,
dans lequel le deuxième seuil prédéterminé est supérieur au premier seuil prédéterminé.

7. Appareil selon la revendication 5 ou 6, dans lequel le module de régulation (702) comprend en outre :
un sous-module de réception (7025), configuré pour recevoir des informations de priorité d'applications introduites par un utilisateur avant que le deuxième sous-module de régulation ou le quatrième sous-module de régulation ne ferme au moins l'une des applications s'exécutant dans le terminal selon la liste de priorité d'applications ; et
un sous-module de génération (7026), configuré pour générer la liste de priorité d'applications selon les informations de priorité d'applications,
dans lequel la liste de priorité d'applications est configurée pour indiquer un ordre de priorité d'applications, et au moins l'une des applications s'exécutant dans le terminal est fermée dans l'ordre de priorité croissant.

8. Appareil selon la revendication 5 ou 6, dans lequel le premier sous-module de régulation (7021) est spécifiquement configuré pour :
réduire une luminosité d'écran du terminal jusqu'à une luminosité d'écran prédéterminée ; et/ou
éteindre une lumière de touches d'écran du terminal ; et/ou
le troisième sous-module de régulation (7023) est spécifiquement configuré pour :
réduire une luminosité d'écran du terminal jusqu'à une luminosité d'écran prédéterminée ; et/ou
éteindre une lumière de touches d'écran du terminal.

9. Support de stockage lisible par ordinateur sur lequel sont stockées des instructions qui, lorsqu'elles sont exécutées par un processeur d'un terminal comprenant un écran, amènent le terminal à réaliser le procédé de régulation de température selon l'une quelconque des revendications 1 à 4.
